# FASCICULE DE BREVET EUROPEEN

(11) **EP 2 199 748 B1**
(45) Date de publication et mention de la délivrance du brevet: **04.04.2012**
(21) Numéro de dépôt: 09179502.1
(22) Date de dépôt: 16.12.2009
(51) Int. Cl.: G01C 23/00

(54) **Système de sécurisation de l'affichage des consignes provenant du control aérien**
Sicherungssystem der Anzeige von Anweisungen der Flugverkehrskontrolle
System for securing the display of instructions issued from air traffic control

(30) Priorité: 16.12.2008 FR 0807057
(43) Date de publication de la demande: 23.06.2010
(73) Titulaire: Thales, 92200 Neuilly Sur Seine (FR)
(72) Inventeur: Aymeric, Bruno, 33160 St. Medard en Jalles (FR); Leroux, Yannick, 33185 Le Haillan (FR); Garros, Pierre-Olivier, 33400 Talence (FR)
(74) Mandataire: Esselin, Sophie

(56) Documents cités:
- WO-A-97/41495
- FR-A- 2 882 439
- US-A1- 2005 178 903
- US-A1- 2005 203 675

## Description

La présente invention concerne le domaine des systèmes d'affichage et de contrôle de poste de pilotage pour aéronef. Plus particulièrement, l'invention se rapporte aux systèmes d'affichages complexes destinés à afficher des consignes de vol critiques, celles-ci pouvant provenir de différentes sources. En outre, l'invention traite plus particulièrement de l'affichage d'informations nécessitant un haut degré d'intégrité, et de leur activation pour la navigation d'un aéronef.

Actuellement, les systèmes d'affichages pour aéronef comprennent plusieurs fenêtres, la composition de ces fenêtres dépend de plusieurs paramètres, notamment de la phase de vol, de la configuration requise par le pilote et de la mise à jour des données par les systèmes avions.

Néanmoins, certaines fenêtres comprennent des informations de haute importance pour la conduite du vol, elles sont appelées informations primaires de vol. Elles nécessitent un affichage permanent sur l'écran à disposition du pilote. Cette configuration d'affichage est appelée dans la terminologie anglo-saxonne en aéronautique : "Primary Flight Display", dont l'acronyme est PFD. Le PFD comprend généralement plusieurs zones d'affichages.

Parmi les zones qui constituent ce PFD, il y a l'affichage des modes de vol qui représente l'état et l'engagement des modes du directeur de vol, du directeur de poussée, du pilote automatique et de l'auto-manette.

Cette dernière zone d'affichage est généralement appelée bandeau FMA, dont l'acronyme anglo-saxon signifie Flight Mode Annunciations, signifiant "Annonce des modes de vols".

Le bandeau FMA affiche donc généralement uniquement des retours d'état du système directeur de vol. Cependant les récentes améliorations du bandeau FMA permettent d'inclure aussi une représentation de la cible des modes que le pilote automatique suit. Par exemple, en mode CAP, la valeur du cap servant de consigne est affichée à coté de l'indication de mode latéral.

La gestion du pilote automatique est assurée par l'intermédiaire d'un panneau de contrôle dédié, également appelé dans la terminologie anglo-saxonne "Flight Guidance and Control Panel" dont l'acronyme est FGCP. Ce panneau permet également de changer un mode, ou une consigne, telle que la valeur de ce cap.

Certains des ces panneaux incluent des retours visuels de valeurs de consigne et parfois aussi de modes et d'unités.

En outre, de nombreux échanges comprenant des consignes de vol proviennent des contrôleurs aériens. La plupart des consignes sont délivrées oralement par voie radio mais commencent peu à peu à être transmises, dans les récents systèmes, par liaisons de données.

Certains systèmes d'affichage de fenêtres permettent la consultation et la rédaction de messages en provenance ou à destination des contrôleurs aériens.

Des moyens de désignation intégrés à une fenêtre de gestion permettent au pilote de réaliser, via la sélection d'objets interactifs affichés, les actions nécessaires.

Les messages étant formatés, un système avionique peut interpréter ces messages et les prendre en compte. Cette solution existe en ce qui concerne des messages ayant un impact sur le calculateur de vol, tel qu'un FMS, dont l'acronyme couramment employée signifie "Flight Management System" dans la terminologie aéronautique. Le message peut ainsi être transmis directement au FMS, lequel modifiera le plan de vol en conséquence sous contrôle et validation du pilote. Selon les implémentations, l'interface du FMS permet alors de vérifier la modification de plan de vol et de l'activer.

En revanche, un problème persiste lorsque la conduite du vol n'est pas assurée par le FMS car aucune prise en compte des consignes, provenant des contrôleurs aériens, n'est aujourd'hui automatique.

Par exemple, si l'aéronef n'est pas en mode de navigation verticale gérée par le FMS, la trajectoire verticale suivie par l'aéronef n'est pas celle que préconise le FMS mais celle que fixe le pilote manuellement au travers du FGCP.

La multiplication des afficheurs et des fenêtres affichant les consignes de vol constitue un risque potentiel de mauvaise interprétation et de mauvaise manipulation.

Les consignes de vol peuvent provenir, selon les modes, du FMS ou être réglé manuellement à partir d'un dispositif de contrôle ou être reçus du contrôle aérien par liaisons de données. En outre, le pilote doit pouvoir discriminer rapidement une valeur d'une consigne courante et une consigne sélectionnée prête à être envoyée au calculateur de vol.

Les équipements à superviser par le pilote, les modes de navigation et les différents états des consignes de vol multiplient les risques d'interprétation du pilote.

Le document US2005/0203675 décrit un procédé d'affichage automatique d'information comprenant des instructions de contrôle de trafic aérien. FR-A-2 882 439 décrit un dispositif embarqué de gestion des données échangées par un aéronef avec le sol ou d'autres aéronefs.

L'invention permet de pallier aux inconvénients précités.

Notamment, l'invention permet de concentrer un affichage clair et distinct dans le FMA par exemple, des différentes valeurs de consignes, de leur provenance et de leur état tout en conservant une sécurité sur l'activation des consignes pour leur prise en compte par le calculateur de vol.

Le dispositif d'affichage selon l'invention permet de représenter les consignes saisies par le pilote au FGCP, de permettre à travers l'interface de gestion de récupérer automatiquement les ordres du contrôle aérien et de s'en servir pour modifier les consignes présélectionnées sur le dispositif d'affichage.

En outre le dispositif de contrôle selon l'invention permet de sélectionner des consignes provenant du FMS ou des consignes manuelles et de les discriminer simplement.

Le dispositif d'affichage permet alors au pilote de vérifier toujours dans la même zone de l'écran que les ordres du contrôle aérien sont correctement passés et de les valider afin qu'ils deviennent des consignes effectives pour le pilote automatique.

Avantageusement, le système de prise en compte automatique de consignes de vol pour aéronef comprend :
- un pilote automatique et un dispositif d'affichage, le dispositif d'affichage comprenant une zone déterminée regroupant l'affichage des consignes courantes de vol ;
- un calculateur de vol délivrant un premier ensemble de consignes de vol définissant un plan de vol préétabli, appelées CONS_FMS ;
- un dispositif de contrôle d'un second ensemble de consignes de vol manuelles, appelées CONS_PILOTE ;
- un gestionnaire de consignes provenant du contrôle aérien, lesdites consignes étant transmises au moyen d'une liaison de données par voie hertzienne et définissant un troisième ensemble de consignes, appelées CONS_CONTROLEUR,
- des moyens de visualisations du troisième ensemble de consignes.

Avantageusement, le système comprend :
- des moyens de sélection d'au moins une consigne, dite consigne sélectionnée, d'au moins un des ensembles de consignes permettant d'afficher au moins sa valeur dans la zone déterminée distinctement aux cotés des consignes courantes de vol, la distinction s'effectuant au moyen d'une première symbologie remarquable et ;
- des moyens d'activation d'au moins une consigne sélectionnée permettant de remplacer la consigne courante par la valeur de la consigne sélectionnée dans la zone déterminée, chaque consigne sélectionnée activée étant transmise au calculateur de vol.

Avantageusement, dans un mode de réalisation, les moyens d'activation d'une consigne du premier et du second ensemble sont identiques. Dans un autre mode de réalisation qui peut se combiner au précédent les moyens d'activation d'une consigne du troisième et du second ensemble sont identiques.

Avantageusement, le dispositif de contrôle comprend les moyens d'activation d'une consigne du second ensemble.

Avantageusement, le dispositif de contrôle comprend les moyens de sélection d'une consigne du premier et du second ensemble.

Avantageusement, les moyens de sélection d'une consigne du second ensemble comprennent des moyens de réglage d'une valeur numérique.

Avantageusement, les moyens de sélection d'une consigne du premier ensemble comprennent un bouton de sélection de mode.

Avantageusement, les moyens de réglage permettent de modifier une valeur d'une consigne sélectionnée, le dispositif d'affichage comprenant une seconde symbologie remarquable correspondant à un état de "modification en cours" d'une consigne sélectionnée.

Avantageusement, les moyens de réglage comprennent au moins un rotacteur.

Avantageusement, les moyens de sélection d'une consigne du troisième ensemble est un bouton situé sur le gestionnaire de consignes du contrôle aérien.

Avantageusement, les moyens d'activation d'une consigne du troisième ensemble est un bouton tactile disposé en superposition des moyens de visualisation.

Avantageusement, les moyens d'activation d'une consigne du troisième ensemble est un bouton tactile disposé en superposition du dispositif d'affichage.

Avantageusement, une consigne comprend au moins l'une des consignes suivantes : la vitesse, l'altitude, le cap ou l'angle vertical de l'aéronef avec l'horizon.

Avantageusement, le dispositif de contrôle comprend au moins un rotacteur pour chacune des consignes de vol.

Avantageusement, une rotation d'un rotacteur permet d'ajuster la valeur affichée d'une consigne du second ensemble qu'une pression permet d'activer la valeur de la consigne sélectionnée comme la consigne courante à traiter par le calculateur de vol.

D'autres caractéristiques et avantages de l'invention apparaîtront à l'aide de la description qui suit, faite en regard des dessins annexés qui représentent :
- la figure 1A : un dispositif de contrôle de consignes de vol ;
- la figure 1B : un dispositif d'affichage et de sélection des consignes de vol provenant du control aérien ;
- la figure 2 : un dispositif d'affichage des consignes de vol lorsqu'elles sont insérées par un pilote ;
- la figure 3 : un dispositif d'affichage des consignes de vol lorsque l'une d'elle est en train d'être modifiée ;
- la figure 4: un dispositif d'affichage des consignes de vol lorsqu'au moins l'une d'elles est activée ;
- La figure 5 : un dispositif d'affichage des consignes de vol comprenant des moyens d'activation des consignes de vol du control aérien.

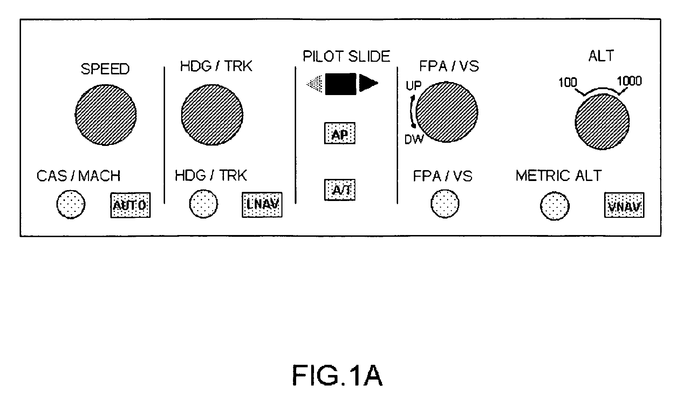

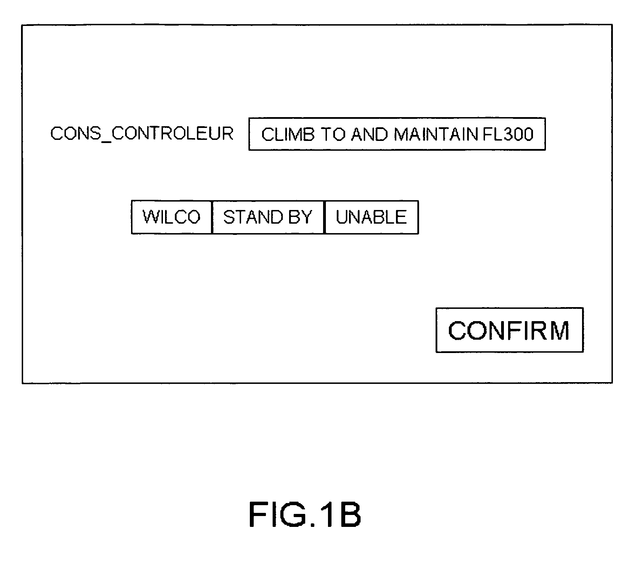

La figure 1 représente un dispositif de contrôle d'un premier ensemble de consignes, dites consignes de vol. Ce dispositif de contrôle est essentiellement dédié aux réglages de consignes manuelles ajustées par le pilote.

Dans un mode de réalisation privilégié, un gestionnaire de consignes du contrôle aérien est séparé du dispositif de contrôle, mais peut être aussi bien intégré dans un autre mode de réalisation à ce même dispositif. En outre, certaines fonctions relatives aux consignes provenant du contrôle aérien peuvent être supportées par le dispositif de contrôle, telle que la modification d'une consigne ou l'activation.

Dans un premier temps, il est détaillé les principales fonctions du dispositif de contrôle.

Une première partie du dispositif de contrôle est destinée à la gestion de la vitesse de l'aéronef.

Un premier rotacteur SPEED permet de régler la vitesse et un premier bouton CAS / MACH permet de définir l'unité de la vitesse que l'on souhaite régler et afficher au moyen du dispositif d'affichage, cette dernière peut être exprimée en noeud ou en mach.

Un appui sur le premier rotacteur permet d'activer la valeur pour quelle soit prise en compte par le calculateur de bord.

Lorsqu'une valeur de consigne apparaît sur le dispositif d'affichage suite à la manipulation du rotacteur, la première valeur affichée est la valeur courante du paramètre. Par exemple, si l'aéronef a une vitesse de 250 noeuds, la première valeur affichée sera 250 noeuds, puis cette valeur évoluera en fonction des actions du pilote sur le rotacteur.

Un second bouton AUTO permet au pilote de choisir la source de la vitesse de consigne. La consigne pouvant provenir soit du calculateur de vol, également appelé FMS, acronyme anglo-saxon désignant le Flight Management System, soit d'une commande manuelle insérée par le pilote à partir d'un dispositif de contrôle.

En mode manuel, c'est par l'intermédiaire du rotacteur que la vitesse de consigne est modifiée par le pilote lui même. En mode pilote automatique, la consigne de vitesse est fournie par le FMS, désignant le Flight Management System.

En mode AUTO, c'est la vitesse calculée par le FMS qui est sélectionnée et affichée sur le dispositif d'affichage aux cotés de la valeur courante. Lorsque le pilote appui sur le rotacteur, la consigne du plan de vol provenant du FMS est prise en compte par l'auto-manette. C'est également cette vitesse qui est affichée sur le dispositif d'affichage en lieu et place de la valeur courante.

Dans une variante de réalisation ou dans un mode de vol approprié, le rotacteur permet d'ajuster la poussée, dans ce dernier cas l'affichage indique non plus SPEED mais STRUST par exemple, indiquant qu'il s'agit d'une consigne de poussée.

Une seconde partie du dispositif de contrôle est destinée à la navigation latérale de l'aéronef.

Un second rotacteur HDG/ TRK de cette première partie permet de régler le cap et de l'afficher au moyen du dispositif d'affichage. Le cap peut être exprimé par un cap en degré par rapport à la direction du nez de l'aéronef ou par rapport à la trajectoire de l'aéronef.

Un troisième bouton HDG/ TRK permet de choisir la nature du cap inséré en mode manuel. Un appui sur le second bouton engage le mode HDG ou TRK.

Le mode HDG signifie que le cap est calculé par rapport à la direction du nez de l'aéronef.

Le mode TRK signifie que le cap est calculé par rapport à la trajectoire de l'aéronef.

Un appui sur le second rotacteur permet d'activer la valeur pour quelle soit prise en compte par le calculateur de bord.

Lorsqu'une valeur de consigne apparaît sur le dispositif d'affichage suite à la manipulation du rotacteur, la première valeur affichée est la valeur courante du paramètre.

Un quatrième bouton LNAV permet au pilote de choisir la source de la consigne. La consigne pouvant provenir soit du FMS, soit d'une commande manuelle insérée par le pilote à partir du second rotacteur du dispositif de contrôle.

Lorsque le quatrième bouton LNAV est engagé le mode "navigation latérale" du FMS est sélectionné, c'est-à-dire que la navigation latérale est prête à être automatiquement gérée par le FMS.

Dans ce dernier cas, la consigne du plan de vol provenant du FMS est affichée aux cotés de la valeur courante.

L'activation de la navigation latérale automatique est effectuée par un appui sur le rotacteur HDG/TRK.

Les consignes provenant du FMS sont alors directement prises en compte par le pilote automatique. Les valeurs des consignes affichées sur le dispositif d'affichage sont celles provenant du FMS.

Généralement, le cap est alors déterminé par un point défini de l'espace tel qu'un waypoint que l'on souhaite rejoindre. Un waypoint est un point connu de l'espace utilisé pour définir un point de passage de l'aéronef dans un plan de vol.

Une troisième partie du dispositif de contrôle est destinée à la navigation verticale de l'aéronef

Un troisième rotacteur FPA / VS permet de régler le niveau de la vitesse verticale ou de l'angle d'inclinaison avec l'horizon.

Un appui sur le troisième rotacteur permet d'activer la valeur pour quelle soit prise en compte par le calculateur de bord.

Un cinquième bouton FPA / VS permet de choisir le paramètre que l'on souhaite régler entre de la vitesse verticale et l'angle d'inclinaison avec l'horizon. Un appui sur le bouton cinquième FPA / VS engage le mode vertical correspondant.

L'altitude de l'aéronef étant un paramètre particulièrement critique, la consigne insérée manuellement par le pilote est comparée avec une consigne d'altitude. Par exemple, si le pilote choisit une valeur de VS positive, l'altitude sélectionnée devra être supérieure à l'altitude courante.

Un quatrième rotacteur ALT permet de définir une altitude de consigne à rejoindre par l'aéronef.

Un appui sur le quatrième rotacteur permet d'activer la valeur pour quelle soit prise en compte par le calculateur de bord.

Un sixième bouton METRIC ALT permet de choisir l'unité de l'altitude pour le réglage et l'affichage de cette dernière. En général, il est possible de l'afficher en mètres ou en pieds.

Un septième bouton VNAV permet au pilote de choisir la source de la consigne. La consigne pouvant provenir du FMS, soit d'une commande manuelle insérée par le pilote à partir d'un dispositif de contrôle.

Lorsque le septième bouton VNAV est engagé le mode "navigation verticale" du FMS est sélectionné, c'est-à-dire que la navigation verticale est prête à être automatiquement gérée par le FMS.

Dans ce dernier cas, la consigne du plan de vol provenant du FMS est affichée aux cotés de la valeur courante.

L'activation de la navigation verticale automatique est effectuée par un appui sur le rotacteur FPA/VS.

Les consignes provenant du FMS sont alors directement prises en compte par le pilote automatique. Les valeurs des consignes affichées sur le dispositif d'affichage sont celles provenant du FMS.

Enfin une dernière partie du dispositif de contrôle permet d'activer l'auto-pilot ou l'auto-manette.

L'auto-pilot, noté AP, étant le pilotage automatique du directeur de vol et l'auto-manette, noté A/T, étant le pilotage automatique du directeur de poussée, ces boutons permettent d'engager le mode de navigation souhaitée.

L'invention permet d'afficher sur le dispositif d'affichage plusieurs états des consignes de vol. Les consignes de vol peuvent être :
- en état "sélectionnées", lorsqu'elles viennent juste d'être ajustées au moyen du dispositif de contrôle, notamment par un rotacteur ou en état "validées" lorsqu'elles proviennent du gestionnaire de consignes du contrôle aérien et qu'elles viennent d'être valider par le pilote ;
- en état "modifiées", lorsqu'elles sont en train d'être modifiées par le pilote ;
- en état activées, lorsqu'elles sont activées par le pilote de manière à ce que l'aéronef suive les consignes.

Avantageusement, le dispositif d'affichage selon l'invention peut être une partie du FMA.

L'invention permet avantageusement d'afficher sur le dispositif d'affichage une consigne sélectionnée par le pilote et non activée au coté de la consigne courante ou activée.

Le système selon l'invention comprend un gestionnaire de consignes du contrôle aérien.

La figure 1B représente une interface simplifiée du gestionnaire de consignes du contrôle aérien.

• Une indicateur de consignes, noté CONS_CONTROLEUR, permet d'afficher la dernière consigne reçue par l'aéronef provenant du contrôle aérien. La réception est effectuée par voie hertzienne ou satellite par une liaison de données. Dans l'exemple, la consigne reçue est par exemple désignée par "CLIMB TO AND MAINTAIN FL300", signifiant que l'aéronef doit monter et maintenir le niveau de vol à l'altitude FL300.

Lors de la réception d'une consigne par le contrôle aérien, le pilote peut :
- Refuser la consigne du contrôle par un bouton UNABLE ;
- Mettre en attente la consigne et la valider ou la refuser ultérieurement à l'aide d'un bouton STAND BY ;
- Accepter et Valider la commande à l'aide d'un bouton WILCO

Dans ce dernier cas, la consigne qui est validée au moyen du bouton WILCO est affichée sur le dispositif d'affichage.

L'activation pour des mesures de sécurité est effectuée par le pilote dans un second temps par exemple à l'aide d'un bouton CONFIRM.

D'autres modes de réalisation permettent d'activer la valeur par le dispositif de control ou le dispositif d'affichage.

Lorsque la consigne validée est activée, elle devient la valeur courante de consigne du directeur de vol. L'ancienne valeur courante affichée disparait et est remplacée par la nouvelle valeur ainsi activée. En outre, le paramètre de la consigne sera délivré au calculateur de vol pour être prise en compte par les équipements de navigation.

Le premier bouton est alors superposé à l'interface du gestionnaire de consignes du contrôle aérien.

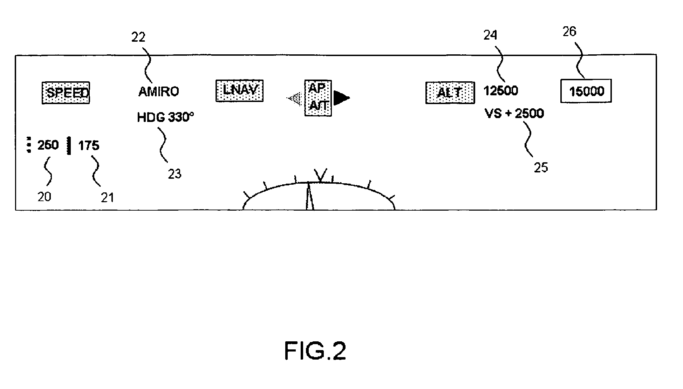

La figure 2 représente un dispositif d'affichage du premier ensemble de consignes selon l'invention.

Un premier mode, appelé mode longitudinal indique la vitesse de l'aéronef. Un indicateur de la vitesse SPEED permet d'afficher d'une part la vitesse longitudinale 21 courante fournie par le FMS, soit 175 noeuds dans l'exemple de la figure et d'autre part la consigne de vitesse 20 sélectionnée à coté de la valeur courante de 250 noeuds. La valeur courante de la vitesse et la consigne de vitesse peuvent être représentées par exemple par deux couleurs différentes de manières à les différencier simplement.

Lorsque le pilote le souhaitera, il pourra activer la consigne de vitesse en lieu et place de la valeur courante de vitesse par une pression sur le premier rotacteur.

L'invention permet également d'afficher aux cotés de la valeur des consignes un symbole indiquant si la consigne est une consigne manuelle ou une consigne provenant du FMS.

Par exemple, sur la figure 2, les pointillés aux cotés de la consigne de vitesse sélectionnée indiquent qu'il s'agit d'une consigne manuelle. En revanche le trait plein aux cotés de la valeur courante permet d'indiquer qu'il s'agit d'une consigne provenant du FMS. Une autre représentation permet d'indiquer que la provenance de la consigne est le contrôle aérien.

Avantageusement, cela permet d'indiquer rapidement au pilote la provenance de la consigne de vitesse.

Par ailleurs, un second mode, appelé mode latéral, permet d'afficher la valeur courante du cap au moyen du dispositif d'affichage selon l'invention. Le cap peut être soit un waypoint à rejoindre désignant ainsi un cap relatif par rapport à la position courante de l'aéronef soit un cap dont la valeur est exprimée en degré soit par rapport à sa direction de vol, soit par rapport à l'axe de l'aéronef selon si le mode HDG ou TRK est engagé.

Dans l'exemple de la figure 2, le cap courant 22 est désigné par la nomination d'un waypoint AMIRO, cette consigne provient donc du FMS. En revanche, le cap sélectionné 23 par le pilote au moyen du dispositif de contrôle, notamment par le rotacteur associé, est désigné par une valeur de cap de 330° exprimée en degrés. Le mode de désignation du cap HDG ou TRK est indiqué aux cotés de la valeur affichée.

Dans un mode de réalisation, l'indicateur LNAV permet au pilote de savoir de manière claire sir la consigne courante ou active est une consigne du FMS.

Enfin, un troisième mode permet d'afficher la valeur de l'altitude et les consignes de navigation verticale.

Un indicateur permet de connaître la nature de la consigne courante. Selon la nature de la consigne courante, par exemple une altitude, une vitesse verticale ou un angle d'inclinaison, l'indicateur affiché est ALT, VS ou FPA.

La valeur de l'altitude courante 24 indique dans l'exemple 12500 pieds. La valeur sélectionnée désignant la consigne d'altitude 26 par le pilote à partir du rotacteur de réglage d'altitude est de 15000 pieds. Dans l'exemple de la figure 2, cette valeur 26 est affichée aux cotés de la valeur en cours. La valeur de la consigne sélectionnée peut être représentée de manière à discriminer facilement la valeur courante de la valeur sélectionnée soit par une couleur différente soit par une forme géométrique associé à la valeur, telle qu'un cadre rectangulaire représentée sur la figure 2.

Le dispositif d'affichage selon l'invention permet d'afficher la valeur de la vitesse verticale 25 sélectionnée, dont la valeur dans l'exemple est 2500 pieds/minute.

Le dispositif d'affichage selon l'invention permet d'afficher un indicateur selon la nature de la consigne courante. Cet indicateur peut être ALT pour désigner une altitude, VS pour désigner une vitesse verticale ou encore FPA pour désigner un angle d'inclinaison de l'aéronef.

Tant que la consigne d'altitude 26 n'est pas activée, elle reste aux cotés de la valeur courante.

La valeur de la consigne 25 donne une indication de vitesse verticale pour atteindre la consigne d'altitude 26.

La consigne d'altitude 26 est réglée à partir du quatrième rotacteur ALT sur le dispositif de contrôle.

L'altitude sélectionnée 26 devient active lorsque le pilote enfonce le quatrième rotacteur.

Enfin une dernière partie du dispositif d'affichage permet d'afficher deux indicateurs AP, désignant l'auto-pilot, et A/T, désignant l'auto-manette.

L'auto-pilot étant le pilotage automatique du directeur de vol et l'auto-manette étant le pilotage automatique du directeur de poussée, ces indicateurs permettent de connaître le mode de navigation utilisée.

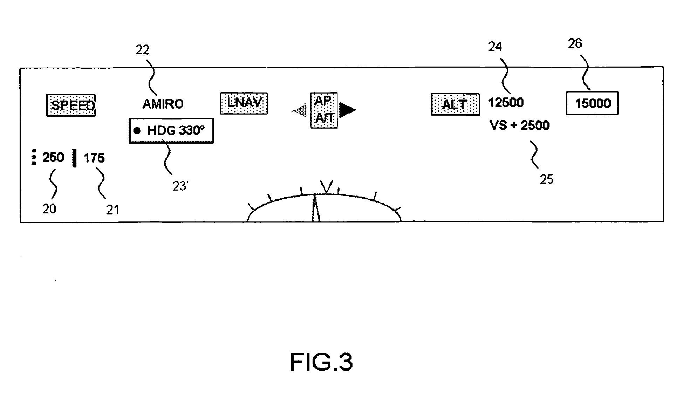

La figure 3 représente le dispositif d'affichage selon l'invention lorsqu'un paramètre d'une consigne provient du gestionnaire de messages du contrôle aérien et qu'elle a été validée par le pilote, par exemple à l'aide de l'interface du gestionnaire de consignes.

Le dispositif d'affichage selon l'invention affiche une consigne 23' indiquant HDG 330°. L'affichage de la consigne est consécutif à la réception d'un message du contrôle aérien par liaisons de données demandant à l'équipage de suivre le cap 330°.

La consigne ainsi validée par le pilote est en attente d'activation. La consigne validée est donc affichée aux cotés de la valeur courante 22 représentée ici par un nom de waypoint, dans l'exemple AMIRO.

Les autres consignes de la figure 3 restent inchangées par rapport à la celles de la figure 2.

Le pilote qui a sélectionné la valeur de la consigne du contrôle aérien reçue à partir de l'interface du gestionnaire de consignes a alors accepté le message des contrôleurs.

De ce fait, une consigne en CAP reçue du contrôle aérien ne pouvant pas être traitée par une modification du plan de vol du FMS, est transmise au dispositif d'affichage en attente pour une activation éventuelle ultérieure.

Un avantage est de pouvoir différencier sur le dispositif d'affichage de l'invention une consigne provenant du FMS, une consigne réglée manuellement par le pilote et une consigne reçue par le contrôle aérien.

La consigne reçue par le contrôle aérien est donc affichée différemment aux cotés de la consigne courante sur le dispositif d'affichage.

Une symbologie dédiée permet de distinguer une consigne courante d'une consigne sélectionnée par un code couleur ou un signe distinctif.

En outre, l'invention permet de distinguer une consigne sélectionnée manuellement à partir du dispositif de contrôle et une consigne sélectionnée provenant du gestionnaire de consignes du contrôle aérien.

La distinction est effectuée par exemple au moyen d'un point ou d'une forme géométrique indiquant que la consigne a été validée par le gestionnaire de consignes du contrôle aérien.

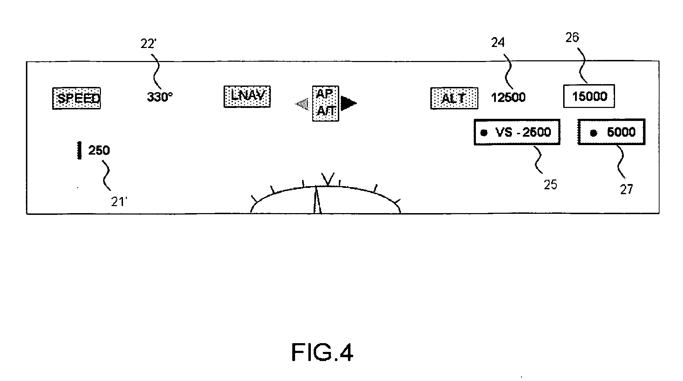

La figure 4 représente un autre exemple d'affichage de l'invention. Les consignes 25, 27 relatives à l'altitude comprennent une altitude cible de 5000 pieds et une vitesse de descente de 2500 noeuds. Avantageusement, une forme géométrique, dans l'exemple un cercle plein, située à coté des consignes sélectionnées au moyen de l'interface du gestionnaire de consignes permettent de déduire qu'il s'agit de consignes provenant du gestionnaire de consignes du contrôle aérien.

Dans cet exemple, la consigne du contrôle aérien concerne un changement d'altitude. La valeur de l'altitude de consigne est proposée, ainsi qu'une valeur de vitesse verticale pour rejoindre cette altitude. Dans une alternative selon la sélection du pilote, la consigne de vitesse de descente peut être une valeur d'angle d'inclinaison.

Dans cet exemple, la consigne 22' a été activée par une pression sur le rotacteur correspondant du dispositif de contrôle et la consigne 21' a été également activée par une pression sur le rotacteur correspondant du dispositif de contrôle. Ces deux dernières consignes sont alors des consignes courantes de navigation qui ont été transmises, suite à l'activation, au calculateur de vol pour être prise en compte par les équipements de navigation.

Dans tous les cas, l'invention permet au pilote, à partir d'une interface sécurisée, de valider les consignes reçues dans un premier temps pour les afficher aux cotés des consignes courantes. Dans un second temps, la prise en compte par le pilote automatique sera enclenchée par une action spécifique visant à activer les consignes.

Cela peut se faire selon différentes variantes de réalisation.

Dans une première variante de réalisation représentée figure 1B, une interface du gestionnaire de consignes du contrôle aérien, noté CONS_CONTROLEUR, affiche un premier bouton, noté CONFIRM. Une action sur le premier bouton permet d'activer la consigne, désignée par "CLIMB TO AND MAINTAIN FL300" dans l'exemple de la figure.

Dans ce dernier cas la consigne qui était préalablement sélectionnée au moyen du bouton WILCO et affichée sur le dispositif d'affichage selon l'invention deviendra la valeur courante. L'ancienne valeur courante affichée disparaitra et sera remplacée par la nouvelle valeur ainsi activée. En outre, le paramètre de la consigne sera délivré au calculateur de vol pour être prise en compte par les équipements de navigation.

Le premier bouton est alors superposé à l'interface du gestionnaire de consignes du contrôle aérien.

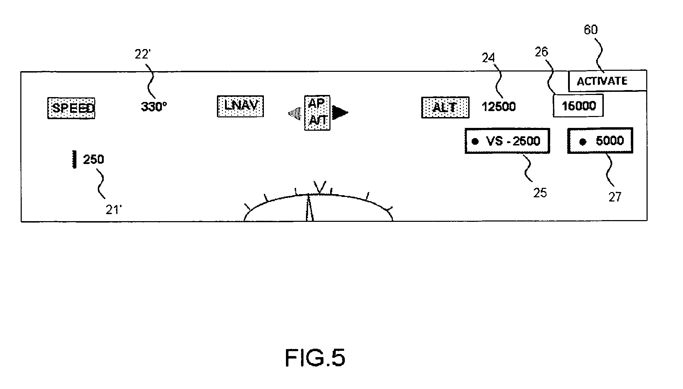

La figure 5 représente une seconde variante de réalisation, dans laquelle l'activation de la consigne est réalisée au moyen d'une pression tactile sur le dispositif d'affichage dans une zone 60 indiquant ACTIVATE.

Les autres consignes restent inchangées par rapport à la figure 4.

Dans une troisième variante de réalisation, l'activation de la consigne provenant du contrôle aérien est réalisée au moyen d'une pression sur le rotacteur du dispositif de contrôle correspondant au paramètre de la consigne. Ce dernier cas bénéficie d'une manipulation commune pour activer une commande manuelle et une commande provenant du gestionnaire de commandes du contrôle aérien.

Dans toutes les variantes de réalisations, l'activation a pour effet de remplacer dans le dispositif d'affichage selon l'invention l'ancienne consigne active par la nouvelle consigne préalablement sélectionnée.

En outre, l'invention permet d'indiquer qu'une valeur sélectionnée est en cours de modification. La consigne sélectionnée, par exemple manuellement, affichée aux cotés de la consigne courante peut être modifiée à chaque instant par le pilote.

Selon des variantes de réalisations, la valeur en cours de modification peut-être représentée d'une couleur différente et/ou entourée d'une forme géométrique tel qu'un rectangle ou encore peut être affichée en représentation "inverse vidéo".

L'invention permet d'attirer l'attention du pilote vers la valeur en cours de modification. Par exemple, pendant le réglage de la vitesse verticale, l'indication de consigne passe en affichage "inverse vidéo".

Ainsi, l'équipage voit clairement quel paramètre est en cours de modification, évitant toute mauvaise interprétation et toute mauvaise manipulation.

Le dispositif d'affichage selon l'invention permet de garantir qu'une valeur de consigne reste affichée. Ainsi, un pilote peut préparer une valeur de consigne qui sera utilisée plus tard en engageant le mode correspondant.

Ce dernier cas est fréquent lorsque le pilote sait que le contrôleur aérien lui demandera, par exemple, une réduction de vitesse. Il peut alors se tenir prêt et agir rapidement afin d'activer une consigne.

En outre, il peut également valider par le bouton WILCO une consigne reçue par le contrôle aérien en vue de l'activer plus tard.

Si le pilote commet une erreur en manipulant un rotacteur, la valeur de la consigne associée au rotacteur peut être effacée.

Avantageusement, le pilote peut changer la valeur erronée en réappuyant sur le bouton correspondant au mode actuellement engagé. Par exemple, si le pilote a effectué une mauvaise manoeuvre sur un rotacteur, tel que le rotacteur de vitesse, en appuyant sur le bouton AUTO, il fera disparaître l'affichage de la valeur de consigne manuelle du dispositif d'affichage.

## Revendications

1. Système de prise en compte automatique de consignes de vol pour aéronef, le système comprenant
• un pilote automatique et un dispositif d'affichage, le dispositif d'affichage comprenant une zone déterminée regroupant l'affichage des consignes courantes de vol ;
• un calculateur de vol délivrant un premier ensemble de consignes de vol définissant un plan de vol préétabli, appelées CONS_FMS ;
• un dispositif de contrôle d'un second ensemble de consignes de vol manuelles, appelées CONS_PILOTE ;
• un gestionnaire de consignes provenant du contrôle aérien, lesdites consignes étant transmises au moyen d'une liaison de données par voie hertzienne et définissant un troisième ensemble de consignes, appelées CONS_CONTROLEUR,
• des moyens de visualisations du troisième ensemble de consignes,
• des moyens de sélection d'au moins une consigne, dite consigne sélectionnée, d'au moins un des ensembles de consignes permettant d'afficher au moins sa valeur dans la zone déterminée distinctement aux cotés des consignes courantes de vol, la distinction s'effectuant au moyen d'une première symbologie remarquable et ;
• des moyens d'activation d'au moins une consigne sélectionnée permettant de remplacer la consigne courante par la valeur de la consigne sélectionnée dans la zone déterminée, chaque consigne sélectionnée activée étant transmise au calculateur de vol, **caractérisé en ce**
**que** le dispositif de contrôle comprend les moyens d'activation d'une consigne du second ensemble et des moyens de sélection d'une consigne du premier et du second ensemble, les moyens de sélection d'une consigne du second ensemble comprenant des moyens de réglage d'une valeur numérique, les moyens de réglage permettant de modifier une valeur d'une consigne sélectionnée, le dispositif d'affichage comprenant une seconde symbologie remarquable correspondant à un état de "modification en cours" d'une consigne sélectionnée.

2. Système de prise en compte automatique de consignes de vol selon la revendication 1, **caractérisé en ce que** les moyens d'activation d'une consigne du premier et du second ensemble sont identiques.

3. Système de prise en compte automatique de consignes de vol selon la revendication 1, **caractérisé en ce que** les moyens d'activation d'une consigne du troisième et du second ensemble sont identiques.

4. Système de prise en compte automatique de consignes de vol selon la revendication 1, **caractérisé en ce que** les moyens de sélection d'une consigne du premier ensemble comprennent un bouton de sélection de mode.

5. Système de sécurisation de l'affichage de consignes de vol selon la revendication 1, **caractérisé en ce que** les moyens de réglage comprennent au moins un rotacteur.

6. Système de prise en compte automatique de consignes de vol selon la revendication 1, **caractérisé en ce que** les moyens de sélection d'une consigne du troisième ensemble est un bouton situé sur le gestionnaire de consignes du contrôle aérien.

7. Système de prise en compte automatique de consignes de vol selon la revendication 1, **caractérisé en ce que** les moyens d'activation d'une consigne du troisième ensemble est un bouton tactile disposé en superposition des moyens de visualisation.

8. Système de prise en compte automatique de consignes de vol selon la revendication 1, **caractérisé en ce que** les moyens d'activation d'une consigne du troisième ensemble est un bouton tactile disposé en superposition du dispositif d'affichage.

9. Système de prise en compte automatique de consignes de vol selon la revendication 1, **caractérisé en ce qu'**une consigne comprend au moins l'une des consignes suivantes : la vitesse, l'altitude, le cap ou l'angle vertical de l'aéronef avec l'horizon.

10. Système de prise en compte automatique de consignes de vol selon la revendication 4, **caractérisé en ce que** le dispositif de contrôle comprend au moins un rotacteur pour chacune des consignes de vol.

11. Système de prise en compte automatique de consignes de vol selon la revendication 10, **caractérisé en ce qu'**une rotation d'un rotacteur permet d'ajuster la valeur affichée d'une consigne du second ensemble qu'une pression permet d'activer la valeur de la consigne sélectionnée comme la consigne courante à traiter par le calculateur de vol.

## Claims

1. A system for automatically registering flight instructions for aircraft, said system comprising:
• an automatic pilot and a display device, said display device comprising a determined area consolidating the display of the current flight instructions;
• a flight computer providing a first set of flight instructions that define a pre-established flight plan, referred to as CONS_FMS;
• a device for controlling a second set of manual flight instructions, referred to as CONS_PILOTE;
• an instructions manager originating from air traffic control, said instructions being transmitted by means of a data link via microwave channel and defining a third set of instructions, referred to as CONS_CONTROLEUR;
• means for displaying the third set of instructions;
• means for selecting at least one instruction, referred to as the selected instruction, from at least one of the sets of instructions enabling at least its value to be displayed in the distinctly determined area on the sides of the current flight instructions, the distinction being undertaken by means of a first notable symbol and;
• means for activating at least one selected instruction enabling the current instruction to be replaced by the value of the selected instruction in the determined area, each activated selected instruction being transmitted to the flight computer,
**characterised in that** the control device comprises means for activating an instruction from the second set and means for selecting an instruction from the first and the second set, the means for selecting an instruction from the second set comprising means for adjusting a digital value, the adjustment means enabling a value of a selected instruction to be modified, the display device comprising a second notable symbol that corresponds to an "ongoing modification" state of a selected instruction.

2. The system for automatically registering flight instructions according to claim 1, **characterised in that** the means for activating an instruction from the first and the second set are identical.

3. The system for automatically registering flight instructions according to claim 1, **characterised in that** the means for activating an instruction from the third and the second set are identical.

4. The system for automatically registering flight instructions according to claim 1, **characterised in that** the means for selecting an instruction from the first set comprise a mode selection button.

5. The system for automatically securing the display of flight instructions according to claim 1, **characterised in that** the adjustment means comprise at least one selector.

6. The system for automatically registering flight instructions according to claim 1, **characterised in that** the means for selecting an instruction from the third set is a button located on the air traffic control instructions manager.

7. The system for automatically registering flight instructions according to claim 1, **characterised in that** the means for activating an instruction from the third set is a touch button that is superimposed on the display means.

8. The system for automatically registering flight instructions according to claim 1, **characterised in that** the means for activating an instruction from the third set is a touch button that is superimposed on the display device.

9. The system for automatically registering flight instructions according to claim 1, **characterised in that** an instruction comprises at least one of the following instructions: the speed, the altitude, the bearing or vertical angle of the aircraft with the horizon.

10. The system for automatically registering flight instructions according to claim 4, **characterised in that** the control device comprises at least one selector for each of the flight instructions.

11. The system for automatically registering flight instructions according to claim 10, **characterised in that** a rotation of a selector adjusts the displayed value of an instruction from the second set and **in that** a pressure activates the value of the selected instruction, such as the current instruction to be processed by the flight computer.

## Patentansprüche

1. System zum automatischen Registrieren von Fluganweisungen für Luftfahrzeuge, wobei das System Folgendes umfasst:
• einen Autopilot und eine Anzeigevorrichtung, wobei die Anzeigevorrichtung einen bestimmten Bereich umfasst, der die Anzeige der laufenden Fluganweisungen gruppiert;
• einen Flugcomputer, der einen ersten Satz von Fluganweisungen bereitstellt, die einen vorbestimmten Flugplan definieren, CONS_FMS genannt;
• eine Vorrichtung zum Steuern eines zweiten Satzes von manuellen Fluganweisungen, CONS_PILOTE genannt;
• einen von der Flugverkehrsleitstelle stammenden Anweisungsmanager, wobei die Anweisungen über eine Datenverbindung über einen Mikrowellenkanal übertragen werden und einen dritten Satz von Anweisungen definieren, CONS_CONTROLEUR genannt;
• Mittel zum Anzeigen des dritten Anweisungssatzes;
• Mittel zum Wählen von wenigstens einer Anweisung, gewählte Anweisung genannt, aus wenigstens einem der Anweisungssätze, so dass wenigstens sein Wert in dem separat bestimmten Bereich auf den Seiten der aktuellen Fluganweisungen angezeigt werden kann, wobei die Unterscheidung mittels eines ersten auffälligen Symbols erfolgt; und
• Mittel zum Aktivieren von wenigstens einer gewählten Anweisung, die es ermöglicht, dass die laufende Anweisung durch den Wert der gewählten Anweisung in dem bestimmten Bereich ersetzt wird, wobei jede aktivierte gewählte Anweisung zum Flugcomputer gesendet wird,
**dadurch gekennzeichnet, dass** die Steuervorrichtung Mittel zum Aktivieren einer Anweisung aus dem zweiten Satz und Mittel zum Wählen einer Anweisung aus dem ersten und dem zweiten Satz umfasst, wobei die Mittel zum Wählen einer Anweisung aus dem zweiten Satz Mittel zum Regeln eines digitalen Wertes umfassen, wobei die Regelmittel die Modifizierung eines Wertes einer gewählten Anweisung zulassen, wobei die Anzeigevorrichtung ein zweites auffälliges Symbol umfasst, das einem "laufende Modifikation" Zustand einer gewählten Anweisung entspricht.

2. System zum automatischen Registrieren von Fluganweisungen nach Anspruch 1, **dadurch gekennzeichnet, dass** die Mittel zum Aktivieren einer Anweisung aus dem ersten und dem zweiten Satz identisch sind.

3. System zum automatischen Registrieren von Fluganweisungen nach Anspruch 1, **dadurch gekennzeichnet, dass** die Mittel zum Aktivieren einer Anweisung aus dem dritten und dem zweiten Satz identisch sind.

4. System zum automatischen Registrieren von Fluganweisungen nach Anspruch 1, **dadurch gekennzeichnet, dass** die Mittel zum Wählen einer Anweisung aus dem ersten Satz eine Modusauswahltaste umfassen.

5. System zum automatischen Sichern der Anzeige von Fluganweisungen nach Anspruch 1, **dadurch gekennzeichnet, dass** die Regelmittel wenigstens einen Selektor umfassen.

6. System zum automatischen Registrieren von Fluganweisungen nach Anspruch 1, **dadurch gekennzeichnet, dass** die Mittel zum Wählen einer Anweisung aus dem dritten Satz eine Taste sind, die sich auf dem Anweisungsmanager der Flugverkehrsleitstelle befindet.

7. System zum automatischen Registrieren von Fluganweisungen nach Anspruch 1, **dadurch gekennzeichnet, dass** die Mittel zum Aktivieren einer Anweisung aus dem dritten Satz eine Berührungstaste sind, die auf den Anzeigemitteln überlagert ist.

8. System zum automatischen Registrieren von Fluganweisungen nach Anspruch 1, **dadurch gekennzeichnet, dass** die Mittel zum Aktivieren einer Anweisung aus dem dritten Satz eine Berührungstaste sind, die auf der Anzeigevorrichtung überlagert ist.

9. System zum automatischen Registrieren von Fluganweisungen nach Anspruch 1, **dadurch gekennzeichnet, dass** eine Anweisung wenigstens eine der folgenden Anweisungen beinhaltet: Geschwindigkeit, Höhe, Peilwinkel oder vertikaler Winkel des Luftfahrzeugs zum Horizont.

10. System zum automatischen Registrieren von Fluganweisungen nach Anspruch 4, **dadurch gekennzeichnet, dass** die Steuervorrichtung wenigstens einen Selektor für jede der Fluganweisungen umfasst.

11. System zum automatischen Registrieren von Fluganweisungen nach Anspruch 10, **dadurch gekennzeichnet, dass** durch Drehen eines Selektors der angezeigte Wert einer Anweisung aus dem zweiten Satz justiert und durch Drücken der Wert der gewählten Anweisung aktiviert wird, so dass die aktuelle Anweisung vom Flugcomputer verarbeitet werden kann.
